# EUROPÄISCHE PATENTSCHRIFT

(11) **EP 1 648 820 B1**
(45) Veröffentlichungstag und Bekanntmachung des Hinweises auf die Patenterteilung: **07.03.2007**
(21) Anmeldenummer: 04762571.0
(22) Anmeldetag: 28.07.2004
(51) Int. Cl.: C01B 21/14, B01F 3/04

(54) **VERFAHREN ZUR HERSTELLUNG VON HYDROXYLAMMONIUMSALZEN**
METHOD FOR PRODUCING HYDROXYLAMMONIUM SALTS
PROCEDE DE FABRICATION DE SELS D'HYDROXYLAMMONIUM

(30) Priorität: 01.08.2003 DE 10336054
(43) Veröffentlichungstag der Anmeldung: 26.04.2006
(73) Patentinhaber: Domo Caproleuna GmbH, 06234 Leuna (DE)
(72) Erfinder: LÖBEL, Wolfgang, 06118 Halle (DE); STRECKER, Thomas, 06766 Thalheim (DE); SEIDLER, Joachim, 06124 Halle (DE)
(74) Vertreter: Wablat, Wolfgang
(86) Internationale Anmeldenummer: PCT/DE2004/001726
(87) Internationale Veröffentlichungsnummer: WO 2005/012169

(56) Entgegenhaltungen:
- EP-A- 0 234 768
- DE-A- 3 130 305
- US-A- 3 855 404

## Beschreibung

Die Erfindung betrifft ein Verfahren zur Herstellung von Hydroxylammoniumsalzen durch katalytische Reduktion von Stickstoffmonoxid mit Wasserstoff in verdünnter wässriger Lösung von Mineralsäure in Gegenwart von suspendierten Platinträgerkatalysatoren in mehreren hintereinander geschalteten Reaktionsstufen.

Die kontinuierliche Herstellung von Hydroxylammoniumsalzen durch katalytische Reduktion von Stickstoffmonoxid mit Wasserstoff in verdünnter wässriger Lösung von Mineralsäure in Gegenwart eines suspendierten Edelmetallkatalysators ist ein bekanntes, großtechnisch angewendetes Verfahren, welches bereits in der Patentschrift DE 1 177 118 beschrieben ist. Danach werden üblicherweise eine wässrige Lösung von Mineralsäure, die den Katalysator suspendiert enthält, durch mehrere hintereinander geschaltete Reaktionsstufen (Kaskaden) geleitet, in jede Reaktionsstufe ein Gemisch aus Stickstoffmonoxid und Wasserstoff eingeleitet und der letzten Reaktionsstufe katalysatorhaltige Hydroxylammoniumsalzlösung entnommen.

Obwoh1 sich dieses Verfahren prinzipiell bewährt hat, besteht der Bedarf, die Kapazität bestehender Anlagen weiter zu steigern und den Nachteil der Bildung unerwünschter Nebenprodukte wie Distickstoffmonoxid, Stickstoff und Ammoniumsalze, die zu einer Verminderung der Ausbeute an Hydroxylammoniumsalz führt, zu minimieren. Auch führt dies im Falle hoher Distickstoffmonoxid-Konzentrationen zu explosiblen Gemischen. In diesem Zusammenhang wirkt sich auch die Ausbildung von Schaum auf der Oberfläche des Reaktionsgemisches negativ aus.

Dementsprechend wurden bereits viele Untersuchungen zur Verbesserung des Verfahrens durchgeführt. So ist aus der Patentschrift DE 2 736 906 B1 ein Verfahren zur Herstellung von Hydroxylammoniumsalzen bekannt, mit dem es gelingt, durch Erhöhung der Menge an Platin-Graphit-Trägerkatalysator die Geschwindigkeit der Reduktionsreaktion so zu beschleunigen, dass dadurch wesentlich höhere Raum-Zeit-Ausbeuten (d.h. größere Durchsätze), bezogen auf Stickstoffmonoxid, erzielt werden, zu erreichen.

Der Nachteil dieses Verfahrens besteht jedoch darin, dass mit einem Anstieg der Verluste an Platin zu rechnen ist. Außerdem sind der Mengenerhöhung an Katalysator durch die erforderliche Fließfähigkeit und Filtrierbarkeit der Suspension Grenzen gesetzt.

Entsprechend der Patentschrift DE 3 713 733 ist ein Verfahren zur Herstellung von Hydroxylammoniumsalzen bekannt, mit dem die Bildung von Nebenprodukten weit-gehend dadurch unterdrückt wird, dass man mit Schwefel und zusätzlich mit Selen partiell vergiftete Platin-Trägerkatalysatoren verwendet, wobei die Fällung von metallischem Platin aus wässrigen Platinlösungen auf Träger durch Reduktionsmittel in Gegenwart von organischen Chelatbildnern erfolgt.

Nachteilig ist hierbei die unvertretbar hohe Komplizierung der Katalysatorherstellung.

Aus der Patentschrift DE 3 130 305 A1 ist weiterhin ein Verfahren zur Herstellung von Hydroxylammoniumsalzen bekannt, in dem man die Schaumbildung auf der Oberfläche des Reaktionsgemisches durch entsprechende Begrenzung des Feinkornanteils des Platinträgerkatalysators oder durch Besprühen der Oberfläche des Reaktionsgemisches mit Reaktionsgemisch und/oder frisch zugeführter Mineralsäure bzw. durch Zusatz schaumhemmender Verbindungen vermeidet oder zumindest wesentlich unterdrückt.

Der Nachteil dieses Verfahrens besteht darin, dass sich im Verlauf der Einsatzdauer des Katalysators relativ schnell ein gegenüber dem Grenzwert zu hoher Feinkornanteil einstellt bzw. hohe technische Aufwendungen für das Besprühen der Oberfläche des Reaktionsgemisches erforderlich sind. Außerdem muss in vielen Fällen ein Zusatz von schaumhemmenden Fremdstoffen aus Gründen der Prozessstabilität und Produktqualität bei der Weiterverarbeitung der Hydroxylammoniumsalze, z. B. in der Caprolactamerzeugung, ausgeschlossen werden.

Einen bedeutenden Stellenwert bei den Untersuchungen zur Kapazitätssteigerung durch eine möglichst hohe Reaktionsgeschwindigkeit und zur Erhöhung der Selektivität des Umsatzes zu Hydroxylammoniumsalzen, das heißt zur weitgehenden Unterdrückung der Nebenproduktbildung, hat das Regime der Zufuhr der Mineralsäure eingenommen, wofür mehrere Varianten entwickelt wurden.

So beschreibt die Patentschrift DE 3 107 702 ein Verfahren zur Herstellung von Hydroxylammoniumsalzen, in welchem für die letzte Reaktionsstufe ein definierter pH-Wert festgelegt ist und dessen Messwert den Zufluss an frischer wässriger Mineralsäure in die erste Reaktionsstufe steuert. Auf diese Weise werden die Bildung explosiver Abgasgemische und in der letzten Reaktionsstufe eine vermehrte Bildung von Nebenprodukten vermieden.

In einem weiteren, in der Patentschrift DE 4 132 800 beschriebenen Verfahren zur Herstellung von Hydroxylammoniumsulfat wird die Zufuhr an Schwefelsäure geteilt, und zwar vorteilhaft in der Weise, dass in die erste Reaktionsstufe verdünnte Schwefelsäure und in eine oder mehrere der nachfolgenden Stufen konzentriertere Schwefelsäure eingespeist wird, wobei man den Gehalt an freier Schwefelsäure in der letzten Reaktionsstufe stark absinken lässt.

In der gleichen Richtung ist mit der Patentschrift DE 10062325 ein Verfahren zur Herstellung von Hydroxylammoniumsalzen bekannt, gemäß dem man den Zufluss an verdünnter wässriger Lösung von Mineralsäure vor dem Zufluss in die mehreren hintereinander geschalteten Reaktionsstufen in mindestens zwei Teilströme teilt und dabei den Zufluss mittels des pH-Wertes der vorzugsweise letzten Reaktionsstufe steuert, in die der zweite Teilstrom an Säure eingespeist wird.

Die drei genannten, die Säurezufuhr betreffenden patentierten Verfahren sind trotz bestehender Vorteile unbefriedigend, weil sie mit einer Komplizierung der Anlagentechnik verbunden sind und im Falle der Verwendung des gemessenen pH-Wertes als Steuergröße auch zur Beeinträchtigung der Prozessstabilität neigen.

Es war deshalb die technische Aufgabe gestellt, ein Verfahren zur Herstellung von Hydroxylammoniumsalzen bereitzustellen, bei dem auf technisch einfache Weise eine möglichst hohe Reaktionsgeschwindigkeit erzielt wird und die genannten Nachteile, insbesondere zur Sicherheit, vermieden werden.

Diese Aufgabe wird gelöst mit einem Verfahren zur Herstellung von Hydroxylammoniumsalzen durch Umsetzung von Wasserstoff mit Stickoxyd (NO) mit einem molaren Überschuss an Wasserstoff in einem wässrigen Medium aus starken Mineralsäuren in Gegenwart eines auf einem Träger auf Kohlenstoffbasis suspendierten Edelmetallkatalysators bei Überdruck bis zu 10 bar und Temperaturen bis 80 °C, wobei das enthaltende Hydroxylammoniumsalz laufend vom Reaktor abgezogen wird, in einem Rührreaktor mit einer Rührwelle und daran über eine Nabe und Tragfläche oder -stützen befestigten Rührblättern, bei dem erfindungsgemäß
- im unteren Teil des Rührreaktors ein Gaseintritts- und -verteilersystem angeordnet ist,
- sich unmittelbar darüber ein Scheibenrührer befindet, bei dem sich um die Nabe mit Tragfläche oder -stützen abgewinkelte, konkav gewölbte und schräg gestellte Rührblätter befinden, die mit ihren Winkeln oder konkaven Seiten in Bewegungsrichtung (d.h. sich mit ihrer konkaven Seite gegen die Flüssigkeit bewegen) rotieren, und
- am oberen Teil des Rührreaktors auf der Rührwelle ein zweiflügliger Blattrührer angeordnet ist mit versetzt angeordneten Einzelblättern in Form von Lamellen im Winkel von 0 bis 30 ° zur Flügelachse, die bei ihrer Rotation die Reaktorhaube ständig benetzen.

Für die Reaktion wird insbesondere als starke Mineralsäure Schwefelsäure eingesetzt und damit Hydroxylammoniumsulfat gewonnen. In der Regel wird aus Gründen der Reaktivität und der Korrosion vorzugsweise 4 bis 5 normale wässrige Schwefelsäure eingesetzt, deren Konzentration über die Reaktionsstufen hinweg abfällt.

Die Reaktion führt man unter Kühlung des Reaktionsmediums zweckmäßigerweise bei Temperaturen im Bereich von 30 bis 80 °C, besonders vorteilhaft von 40 bis 60 °C, durch.

Im allgemeinen werden Wasserstoff und Stickstoffmonoxid in den einzelnen Reaktionsstufen im molaren Verhältnis von 1,9 bis 2,0 zu 1,0 eingesetzt.

Die Reaktion führt man unter erhöhtem Druck im Bereich von 1,0 bis 10 bara durch, wobei man bereits gute Ergebnisse im Bereich von 3,0 bis 5,0 bara erzielt.

Als Katalysator für die Reduktion des Stickstoffmonoxids verwendet man Platin, das vorzugsweise in einer Menge von 0,1 bis 0,5 Masse-% auf Graphit aufgetragen ist, der mit einem mittleren Durchmesser von 30 bis 80 µm zum Einsatz kommt. Dieser geträgerte Katalysator wird in der wässrigen Schwefelsäure in fein verteilter suspendierter Form in einer Konzentration im Bereich von 7 bis 50 g/l angewendet.

Aus der letzten der hintereinander geschalteten Reaktionsstufen wird das den suspendierten Katalysator enthaltende Reaktionsgemisch abgezogen, das eine Konzentration an Hydroxylammoniumsulfat von 280 bis 300 g/l (24 - 25,5 Ma.-%) besitzt.

Zweckmäßig wird ein ringförmiges Gaseintritts- und Verteilersystem eingesetzt.

Erfindungsgemäß wird das aus Stickstoffmonoxid und Wasserstoff bestehende Gasgemisch in der Weise in die wässrige, den suspendierten Platinträgerkatalysator ent-haltende Schwefelsäure eingeleitet, dass die Gasblasen aus dem angewendeten ringförmigen Gaseintritts- und Verteilersystem feinverteilt (mittlerer Gasblasendurchmesser 5 - 6 mm) mit einer Geschwindigkeit von 7 bis 30 m/sec austreten. Im Strömungsfeld des Idealerweise unmittelbar darüber angeordneten Rührers zerfällt der Gasstrahl innerhalb der Flüssigkeit in kleine Blasen mit großer Phasengrenzfläche, was die Grundlage für einen besseren Stoffübergang bildet.

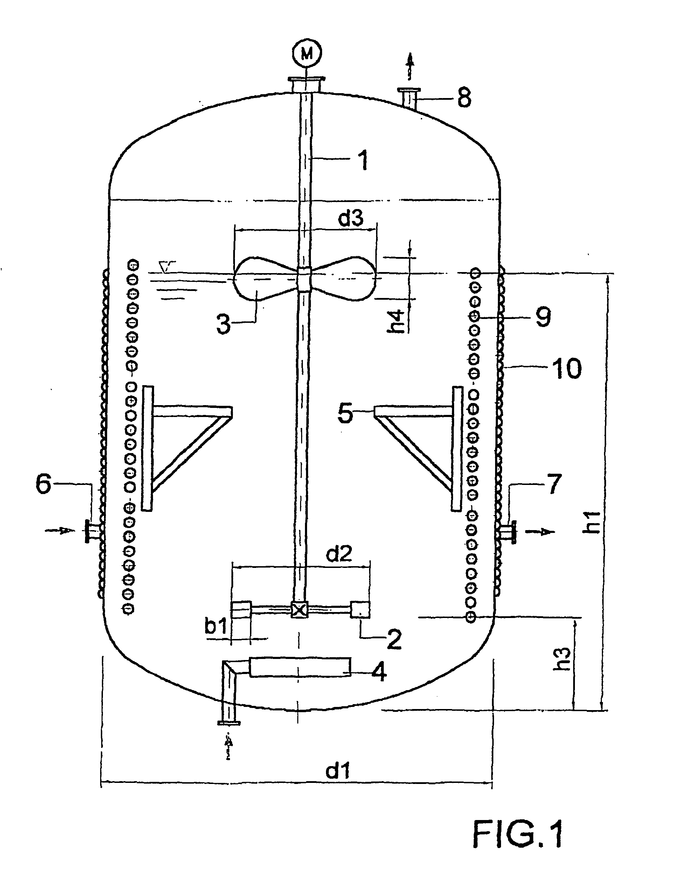

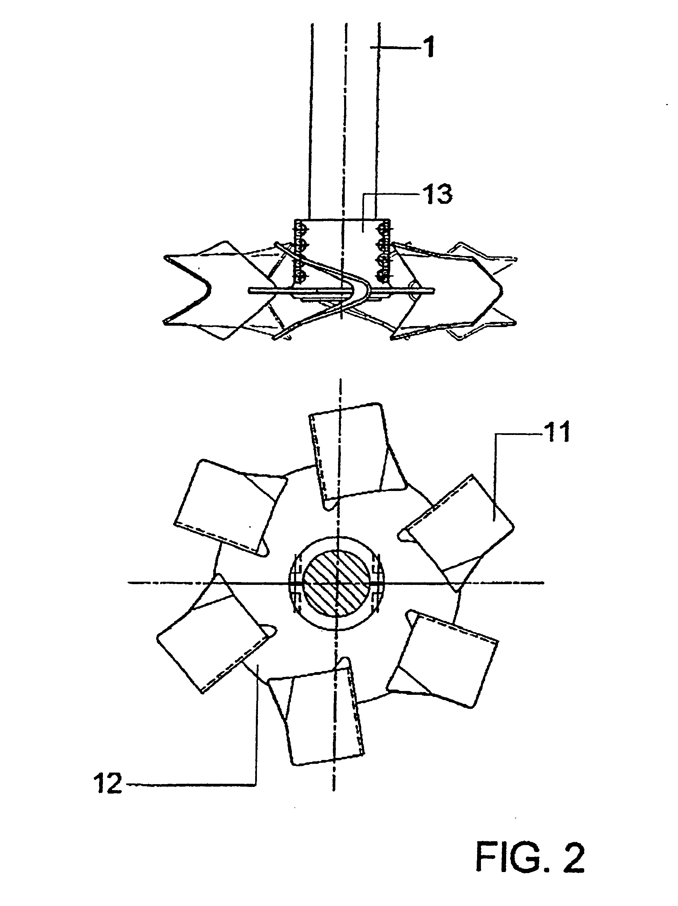

Der modifizierte Scheibenrührer (Fig. 2) am unteren Ende der speziellen Rührvorrichtung ist erfindungsgemäß dadurch gekennzeichnet, dass auf der rotierenden Scheibe gleichmä-ßig vorzugsweise 6 konkav gewölbte, an ihren Enden angewinkelte Rührblätter (Halbrohre) befestigt sind mit einer relativen Blattbreite der Einzelblätter im Verhältnis zum Rührer von 0,2 bis 0,3 (b1: d2 in Fig. 1). Der relative Rührerdurchmesser liegt im Bereich von 0,3 bis 0,4, bezogen auf den Reaktordurchmesser (d2 : d1 in Fig. 1).

Um eine bessere Durchmischung zu erreichen, werden im Rührreaktor (Fig. 1) Wandstrombrecher angeordnet.

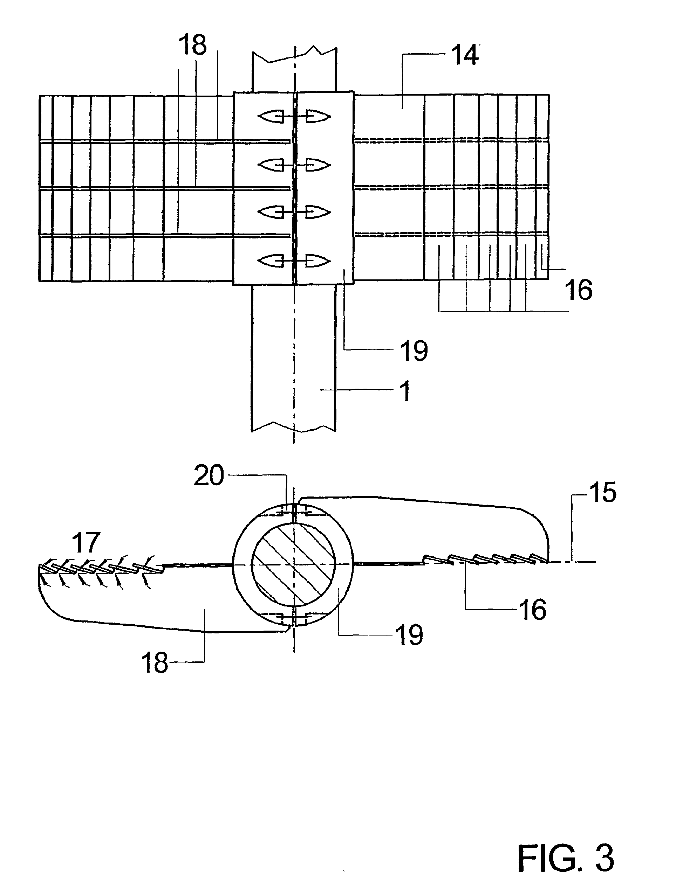

Erfindungsgemäß besteht der zweiflüglige Blattrührer (Fig. 3) im oberen Teil der speziellen Rührvorrichtung aus mehreren versetzt angeordneten Einzelblättern in Lamellenform in Winkeln von 0 bis 30 ° zur Flügelachse, mit einer Blatthöhe der Einzelblätter von 0,2 bis 0,5 im Verhältnis zum Blattdurchmesser (h4 : d3 in Fig. 1) und einem relativen Rührerdurchmesser von 0,3 bis 0,4, bezogen auf den Reaktordurchmesser (d3 : d1 in Fig. 1).

Die Einzelblätter werden lamellenartig mit den Trag- bzw. Versteifungsrippen verschweißt.

Die spezielle Rührvorrichtung wird erfindungsgemäß mit einer Umdrehungsgeschwindigkeit von 80 bis 240 U/min betrieben. Die Umfangsgeschwindigkeiten liegen dabei im Bereich von 5 - 15 m/sec.

Der erfindungsgemäß einzusetzende Rührreaktor (Fig. 1) mit seinen beiden Rührern wird beispielhaft in den Figuren 1 bis 3 dargestellt. Diese Rührvorrichtung besteht aus einer zentralen zylindrischen Rührerwelle, an deren unterem Ende ein modifizierter hochwirksamer Scheibenrührer angebracht ist. Auf der rotierenden Scheibe sind entgegen der Rührrichtung gewölbte, an ihren Enden angewinkelte Rührblätter befestigt. Der obere Teil der Rührerwelle ist mit einem Blattrührer gekoppelt, der aus mehreren versetzt angeordneten Einzelblättern mit unterschiedlichen Anstellwinkeln besteht.

Bis zu 6 Stromstörer bzw. Wandstrombrecher sind installiert, um einen ausreichend hohen Bewehrungsgrad des Reaktors zu gewährleisten. Innen- und außenliegende Kühlschlangen sorgen für eine Temperierung des Prozesses.

Es bedeuten:
**Fig. 1 Rührreaktor**
   - 1.: Rührerwelle
   - 2.: Scheibenrührer (unterer Rührer)
   - 3.: Blattrührer (oberer Rührer)
   - 4.: Zulauf mit Verteilereinrichtung
   - 5.: Wandstrombrecher
   - 6.: Stutzen für Säureeinlauf
   - 7.: Stutzen für Produktablauf
   - 8.: Abgasaustritt
   - 9.: Wendelrohrwärmeüberträger
   - 10.: Mantelwärmeüberträger
   - d1: Durchmesser Rührkessel
   - d2: Durchmesser unterer Rührer
   - d3: Durchmesser oberer Rührer
   - h1: Füllstandshöhe Reaktor
   - h3: Einbauhöhe unterer Rührer
   - h4: Blatthöhe oberer Rührer
   - b1: Blattbreite unterer Rührer
**Fig. 2 Scheibenrührer**
   - 1: Rührerwelle
   - 1: Rührblätter
   - 2: Tragfläche
   - 3: Rührerflansch
**Fig. 3 Blattrührer**
   - 1: Rührerwelle
   - 4: Flügel
   - 5: Flügelachse
   - 6: Einzelblätter
   - 7: Winkel zwischen Einzelblättern und Flügelachse
   - 8: Trag- bzw. Versteifungsbleche
   - 9: Klemmnabe
   - 10: Schraubverbindung

### Erläuterungen zu den Fig. 1 bis 3

### Fig. 1

Auf dem Bild ist der Rührreaktor mit seinen wesentlichen Bestandteilen dargestellt. Über die von oben geführte Rührerwelle (1) wird die für die Vermischung des Reaktorinhalts notwendige Energie von der Motor/Getriebe-Einheit übertragen. Dabei findet der lokale Energieeintrag sowohl am Scheibenrührer (2) als auch an einem Blattrührer (3) statt. Die übliche Einbauhöhe h3 : d1 beträgt 0,19. Zur Vermeidung einer Trombenbildung und damit zur Gewährleistung des notwendigen Bewehrungs-grades dienen bis zu 6 Wandstrombrecher (5). Säurezu- und Produktablauf geschehen über seitlich im unteren Reaktorbereich angebrachte Stutzen (6, 7). Die Gaszufuhr erfolgt über eine externe Verteilereinrichtung (4) in einen Bereich hoher

Energiedichte, um möglichst kleine Blasengrößen zu erzielen. Das Abgas tritt über eine Vorrichtung mit Flüssigkeitsabscheider an der Reaktorhaube aus, was auf der Zeichnung nur angedeutet ist (8).

Für die Kühlung des exotermen Prozesses sorgen 3 separat gespeiste Wendelrohr-wärmeüberträger (9) im Innern als auch ein Mantelwärmeüberträger (10) mit aufgeschweißten Halbrohren im Außenbereich des Reaktors.

### Fig. 2 (oben Vorderansicht, unten Draufsicht)

Aus der Zeichnung ist die Ausführung des eingesetzten 6-blättrigen Scheibenrührers ersichtlich. Die konkav entgegen der Drehrichtung gebogenen Rührblätter bzw. Halbrohre (11) sind auf einer Tragfläche befestigt und an den Blattkanten nach außen abgewinkelt. Für eine individuelle Justierung der Einbauhöhe des Rührers ist der Rührerflansch (12) mit der Welle (1) verschraubt.

### Fig. 3 (oben Vorderansicht, unten Draufsicht)

Fig. 3 zeigt den Blattrührer, der zur Flüssigkeitsbenetzung der Reaktorhaube sowie zur Unterdrückung der Schaumbildung dient. Dieser besteht aus 2 Flügeln (14), die zum Flüssigkeitsspiegel in einem Winkel von 45 bis 90, vorteilhaft 90 °, angestellt sind. Jeder Flügel besteht aus versetzt angeordneten Einzelblättern in Form von Lamellen (16), die zur Flügelachse (15) in Winkeln (17) von 0 bis 30, vorzugsweise 14 bis 24 °, geneigt sind. Zur Stabilisierung der Konstruktion dienen Trag- bzw. Versteifungsbleche (18). Durch die Ausführung als geschraubte Klemmnabe (19, 20) ist eine individuelle Justierung der Einbauhöhe auf der Welle (1) gegeben.

Charakteristische, die Rührer kennzeichnende spezifische Abmaße sind:

| unterer Rührer (Scheibenrührer) | | |
|---|---|---|
| relative Blattbreite | b1/d2 | 0,23 |
| relativer Rührerdurchmesser | d2/d1 | 0,33 |
| relative Einbauhöhe | h3/d2 | 0,58 |

| oberer Rührer (Blattrührer) | | |
|---|---|---|
| relative Blatthöhe | h4/d3 | 0,34 |
| relativer Rührerdurchmesser | d3/d1 | 0,36 |

Das erfindungsgemäße Verfahren hat den Vorteil, dass die Reduktionsreaktion durch die Wirkung der speziellen Rührvorrichtung überraschenderweise mit ungewöhnlich hoher Geschwindigkeit verläuft und dadurch ohne Vergrößerung des Reaktorraumes ein erhöhter Durchsatz erzielt wird. Dieses Ergebnis resultiert insbesondere aus der besonderen konstruktiven Gestaltung des modifizierten Scheibenrührers, mit dem es gelingt, das aus einem unmittelbar unterhalb dieses Scheibenrührers angebrachten ringförmigen Gaseintritts- und Verteilersystem eingeleitete, aus Stickstoffmonoxid und Wasserstoff bestehende Gasgemisch in der wässrigen, suspendierten Platinträgerkatalysator enthaltenden Schwefelsäure im Vergleich zu anderen Rührertypen extrem fein zu dispergieren, eine vollständige Gasblasenverteilung und eine hohe Gasblasenrezirkulation zu erreichen. Der infolgedessen stark verbesserte Stofftransport beeinflusst in unerwartet hohem Maße die auf der Oberfläche des Katalysators ablaufenden Prozesse.

Die durch den Scheibenrührer bewirkten vorteilhaften Reaktionsbedingungen führen außerdem zu einer wesentlichen Verringerung des Stickstoffmonoxidgehaltes im Abgas der Rührreaktoren und tragen damit neben der Emissionssenkung zu einer verbesserten NO-Ausbeute der Gesamtanlage bei.

Durch die besondere Blattform des modifizierten Scheibenrührers besteht weiterhin der Vorteil, dass der Einfluss der Begasung auf den Leistungsbeiwert äußerst gering ist und der Rührer hierdurch eine hohe mechanische Stabilität erreicht bezüglich hydraulischer Radialkräfte. Die hohe mechanische Stabilität ermöglicht eine hohe Betriebssicherheit und damit lange Betriebslaufzeiten, da die verwendeten Gleitringdichtungen weniger stark radial beansprucht werden.

Im direkten Vergleich zum klassischen Scheibenrührer kann ein größerer Rührerdurchmesser verwendet werden mit dadurch verbesserten Möglichkeiten der Gasdispergierung bei gleicher installierter Leistung.

Das vorteilhafte Ergebnis wird aber auch durch den speziellen Blattrührer am oberen Teil der Rührerwelle erreicht, weil erfindungsgemäß auf einfache Weise die aus Gründen der Betriebssicherheit (Vermeiden der Bildung trockener Katalysatornester wegen Katalysierung der exothermen Reaktion von NO mit H₂ zu NH₃) und der Produktqualität (H₂-Korrosion am Stahl) unbedingt erforderliche Beaufschlagung der Reaktorhaube mit Flüssigkeit auch im Falle von Füllstandsschwankungen im Reaktor gewährleistet wird. Außerdem gelingt es durch die spezielle Bauart des Rührers, die Schaumbildung ohne Oberflächenberieselung oder Zusätze an Fremdsubstanzen wirksam zu unterdrücken.

Entsprechend der aufgrund des Reaktionsgleichgewichts innerhalb einer Kaskade aus mehreren Reaktoren abnehmenden Triebkraft des Umsatzes kommt es besonders auf die Ausstattung der ersten Reaktoren mit den erfindungsgemäß gestalteten Scheibenrührern an, damit der durch Diffusion bewirkte Reaktionswiderstand verringert wird.

Das nach dem erfindungsgemäßen Verfahren erhaltene Hydroxylammoniumsulfat ist für die Herstellung von Cyclohexanonoxim, einem Ausgangsprodukt für die Erzeugung von Caprolactam geeignet.

Das Verfahren gemäß der Erfindung sei an folgendem Beispiel veranschaulicht.

In die aus 5 Reaktoren (Flüssigvolumen 38 m³) bestehende Kaskade werden effektiv 17 m³/h einer 4,4 normalen Schwefelsäure zugespeist. Die Drehzahl der Rührerwelle beträgt 160 min⁻¹. Das gestuft auf die Reaktoren verteilte NO-H₂-Gemisch mit ca. 32 Vol.-% NO reagiert am Katalysator zu NH₂OH, N₂O und NH₃. NH₂OH und NH₃ werden an Schwefelsäure gebunden. Der Prozess findet statt bei 43 °C und einem Abgasdruck von 3,3 bara bis zu einer Restkonzentration Schwefelsäure in Höhe von 0,2 bis 0,4 n. Die Endkonzentrationen des Hydroxylammoniumsulfats und Ammoniumsulfats liegen bei 280 bis 300 g/l und 7 bis 20 g/l. Die Gaszufuhr wird so gesteuert, dass der NO-Anteil im Abgas 5 bis 6 Vol.-% beträgt mit einem N₂O-Gehal von 4 bis 5 Vol.-%. Mit dieser Konfiguration werden HAS-Ausbeuten von 27 bis 28 kg HAS/m³ Reaktionsvolumen erreicht.

Werden 2 der 5 Reaktoren mit modifizierten Begasungsrührern der beschriebenen Art ausgerüstet, sinkt der NO-Anteil im Abgas dieser Reaktoren von 4,6 auf 3,1 Vol.-%. Der verbesserte NO-Umsatz kann dann genutzt werden für eine Erhöhung der Säurespeisung auf effektiv 18 m³/h, was einer Ausbeute von mindestens 29 kg HAS/m³ Reaktionsvolumen entspricht. Dabei bleibt der Anteil des Ammoniumsulfates unverändert niedrig.

## Patentansprüche

1. Verfahren zur Herstellung von Hydroxylammoniumsalzen durch Umsetzung von Wasserstoff mit Stickoxyd (NO) mit einem molaren Überschuss an Wasserstoff in einem wässrigen Medium aus starken Mineralsäuren in Gegenwart eines auf einem Träger auf Kohlenstoffbasis suspendierten Edelmetallkatalysators bei Überdruck bis zu 10 bar und Temperaturen bis 80 °C, wobei das enthaltende Hydroxylammoniumsalz laufend vom Reaktor abgezogen wird, in einem Rührreaktor mit einer Rührwelle und daran über eine Nabe und Tragfläche oder -stützen befestigten Rührblättern, **dadurch gekennzeichnet, dass**
- im unteren Teil des Rührreaktors ein Gaseintritts- und -verteilersystem angeordnet ist,
- sich unmittelbar darüber ein Scheibenrührer befindet, bei dem sich um die Nabe mit Tragfläche oder -stützen abgewinkelte, konkav gewölbte und schräg gestellte Rührblätter befinden, die mit ihren Winkeln oder konkaven Seiten in Bewegungsrichtung rotieren, und
- am oberen Teil des Rührreaktors auf der Rührwelle ein zweiflügeliger Blattrührer angeordnet ist mit versetzt angeordneten Einzelblättern in Lamellenform in Winkeln von 0 bis 30 ° zur Flügelachse, die bei ihrer Rotation die Reaktorhaube ständig benetzen.

2. Verfahren zur Herstellung von Hydroxylammoniumsalzen nach Anspruch 1, **dadurch gekennzeichnet, dass** als starke Mineralsäure Schwefelsäure in einer Konzentration von 4 bis 5 normal eingesetzt und Hydroxylammoniumsulfat gewonnen wird.

3. Verfahren zur Herstellung von Hydroxylammoniumsalzen nach Anspruch 1 oder 2, **dadurch gekennzeichnet, dass** Wasserstoff und NO im molaren Verhältnis von 1,9 bis 2,0 zu 1,0 eingesetzt werden.

4. Verfahren zur Herstellung von Hydroxylammoniumsalzen nach einem oder mehreren der Ansprüche 1 bis 3, **dadurch gekennzeichnet, dass** der suspen-dierte Katalysator (einschl. Träger) in Konzentrationen von 7 bis 50 g/l Flüssigkeitssuspension und mit einem mittleren Durchmesser von 30 bis 80 µm verwendet wird.

5. Verfahren zur Herstellung von Hydroxylammoniumsalzen nach einem oder mehreren der Ansprüche 1 bis 4, **dadurch gekennzeichnet, dass** als Edelmetallkatalysator Platin in einer Konzentration von 0,1 bis 0,5 Masse%, bezogen auf den Kohlenstoffträger, eingesetzt wird.

6. Verfahren zur Herstellung von Hydroxylammoniumsalzen nach einem oder mehreren der Ansprüche 1 bis 5, **dadurch gekennzeichnet, dass** die Gase aus dem ringförmigen Gaseintritts- und Verteilersystem mit einem Gasblasendurchmesser von durchschnittlich 5 mm bis 6 mm und einer Gasgeschwindigkeit von 7 bis 30 m/sec austreten.

7. Verfahren zur Herstellung von Hydroxylammoniumsalzen nach einem oder mehreren der Ansprüche 1 bis 6, **dadurch gekennzeichnet, dass** an der rotierenden Nabe des Scheibenrührers gleichmäßig 6 konkav gewölbte Rührblätter befestigt sind.

8. Verfahren zur Herstellung von Hydroxylammoniumsalzen nach einem oder mehreren der Ansprüche 1 bis 7, **dadurch gekennzeichnet, dass** im Rührreaktor Wandstrombrecher angeordnet sind.

9. Verfahren zur Herstellung von Hydroxylammoniumsalzen nach einem oder mehreren der Ansprüche 1 bis 8, **dadurch gekennzeichnet, dass** der zweiflügelige Blattrührer im oberen Teil des Rührreaktors mit einem Anstellwinkel von 45 bis 90 °, bezogen auf die Flüssigkeitsoberfläche im Reaktor angeordnet ist, aus versetzt angeordneten Einzelblättern in Form von Lamellen besteht und einen Rührerdurchmesser von 0,3 bis 0,4 im Verhältnis zum Reaktordurchmesser hat.

10. Verfahren zur Herstellung von Hydroxylammoniumsalzen nach Anspruch 9, **dadurch gekennzeichnet, dass** im Blattrührer die Blatthöhe der Einzelblätter 0,2 bis 0,5 im Verhältnis zum Durchmesser des Blattrührers beträgt.

11. Verfahren zur Herstellung von Hydroxylammoniumsalzen nach einem oder mehreren der Ansprüche 1 bis 10, **dadurch gekennzeichnet, dass** der Scheibenrührer im unteren Teil des Reaktors mit einer Umfangsgeschwindigkeit von 5 bis 15 m/sec betrieben wird.

## Claims

1. A method for producing hydroxylammonium salts by reacting hydrogen with nitrous oxide (NO) with a molar hydrogen surplus in an aqueous medium of strong mineral acids in the presence of a noble metal catalyst suspended on a carbon-based support at excess pressure up to 10 bar and temperatures up to 80°C, the hydroxylammonium salt being constantly removed from the reaction vessel, said vessel being a stirred reactor with an agitator shaft and agitator blades attached to it via a hub and bearing surface or support, **characterized in that**
- a gas inlet and distribution system is provided in the lower part of the stirred reactor,
- a disk agitator is placed immediately above, the hub with bearing surface or support of which comprising angled, concave and tilted agitator blades that rotate their angled or concave sides in the direction of motion, and
- a two-blade blade agitator is provided on the agitator shaft in the upper part of the stirred reactor, its individual leaves being offset like lamellas at an angle of 0 to 30°C to the blade axis so that they constantly wet the reactor cap when rotating.

2. The method for producing hydroxylammonium salts according to claim 1, **characterized in that** sulfuric acid at a 4 to 5-normal concentration is used as the strong mineral acid and the product is hydroxylammonium sulfate.

3. The method for producing hydroxylammonium salts according to claims 1 or 2, **characterized in that** hydrogen and NO are used at a molar ratio of 1.9 to 2.0 : 1.0.

4. The method for producing hydroxylammonium salts according to one or several of claims 1 to 3, **characterized in that** the suspended catalyst (including its support) is used in a liquid suspension at 7 to 50 g/l and a mean diameter of 30 to 80 µm.

5. The method for producing hydroxylammonium salts according to one or several of claims 1 to 4, **characterized in that** platinum is used as a noble metal catalyst at a concentration of 0.1 to 0.5 percent by weight in relation to its carbon support.

6. The method for producing hydroxylammonium salts according to one or several of claims 1 to 5, **characterized in that** the gases escape from an annular gas inlet and distribution system with an average gas bubble diameter of 5 mm to 6 mm and a gas speed of 7 to 30 m/sec.

7. The method for producing hydroxylammonium salts according to one or several of claims 1 to 6, **characterized in that** 6 concave agitator blades are regularly attached to the rotating hub of the disk agitator.

8. The method for producing hydroxylammonium salts according to one or several of claims 1 to 7, **characterized in that** wall baffles are arranged in the stirred reactor.

9. The method for producing hydroxylammonium salts according to one or several of claims 1 to 8, **characterized in that** the two-blade blade agitator in the top portion of the stirred reactor is placed at an angle of incidence of 45° to 90° in relation to the liquid level in the reactor, wherein it consists of offset individual lamella-like leaves, and wherein it has an agitator diameter of 0.3 to 0.4 relative to the reactor diameter.

10. The method for producing hydroxylammonium salts according to claim 9, **characterized in that** the blade height of the individual leaves of the blade agitator is 0.2 to 0.5 relative to the blade agitator diameter.

11. The method for producing hydroxylammonium salts according to one or several of claims 1 to 10, **characterized in that** the disk agitator in the bottom portion of the reactor is operated at a peripheral speed of 5 to 15 m/sec.

## Revendications

1. Procédé de fabrication de sels d'hydroxylammonium par conversion d'hydrogène avec de l'oxyde d'azote (NO) avec un excédent molaire d'hydrogène dans un milieu aqueux en acides minéraux forts en présence d'un catalyseur de métal noble en suspension sur un support à base de carbone à une surpression allant jusqu'à 10 bar et à des températures jusqu'à 80°C, dans lequel le sel d'hydroxylammonium contenu est retiré en continu du réacteur, procédé mis en oeuvre dans un réacteur agitateur avec un arbre agitateur et des pales agitatrices fixées à celui-ci via un moyeu et une surface de soutien ou des montants de soutien, **caractérisé en ce que**
- dans la partie inférieure du réacteur agitateur est agencé un système d'entrée et de distribution de gaz,
- directement au-dessus se trouve un agitateur à plaques dans lequel des pales agitatrices coudées, bombées de manière concave et orientées en oblique se trouvent autour du moyeu avec surface de soutien ou montants de soutien, pales agitatrices qui tournent avec leurs angles ou leurs faces concaves en direction de mouvement, et
- sur la partie supérieure du réacteur agitateur, un agitateur à deux pales est agencé sur l'arbre agitateur avec des pales individuelles agencées avec décalage sous forme de lamelles sous des angles de 0 à 30° par rapport à l'axe de pale, lesquelles mouillent en permanence la calotte du réacteur lors de leur rotation.

2. Procédé de fabrication de sels d'hydroxylammonium selon la revendication 1, **caractérisé en ce qu'**on utilise à titre d'acide minéral fort de l'acide sulfurique dans une concentration de 4 à 5 N et on obtient du sulfate d'hydroxylammonium.

3. Procédé de fabrication de sels d'hydroxylammonium selon la revendication 1 ou 2, **caractérisé en ce qu'**on utilise l'hydrogène et du NO dans le rapport molaire de 1,9 à 2,0:1,0.

4. Procédé de fabrication de sels d'hydroxylammonium selon l'une ou plusieurs des revendications 1 à 3, **caractérisé en ce que** le catalyseur en suspension (y compris le support) est utilisé dans des concentrations de 7 à 50 g/l de suspension dans le liquide et avec un diamètre moyen de 30 à 80 µm.

5. Procédé de fabrication de sels d'hydroxylammonium selon l'une ou plusieurs des revendications 1 à 4, **caractérisé en ce qu'**on utilise à titre de catalyseur de métal noble du platine dans une concentration de 0,1 à 0,5 % en masse par rapport au support de carbone.

6. Procédé de fabrication de sels d'hydroxylammonium selon l'une ou plusieurs des revendications 1 à 5, **caractérisé en ce que** les gaz sortent hors du système annulaire d'entrée et de distribution de gaz avec un diamètre de soufflage de gaz de 5 mm à 6 mm en moyenne et avec une vitesse de gaz de 7 à 30 m/sec.

7. Procédé de fabrication de sels d'hydroxylammonium selon l'une ou plusieurs des revendications 1 à 6, **caractérisé en ce que** sur le moyeu rotatif de l'agitateur à plaques sont fixées de manière régulière 6 pales agitatrices bombées de manière concave.

8. Procédé de fabrication de sels d'hydroxylammonium selon l'une ou plusieurs des revendications 1 à 7, **caractérisé en ce que** des chicanes sont agencées dans le réacteur agitateur.

9. Procédé de fabrication de sels d'hydroxylammonium selon l'une ou plusieurs des revendications 1 à 8, **caractérisé en ce que** l'agitateur à deux pales est agencé dans la partie supérieure du réacteur agitateur avec un angle d'attaque de 45 à 90° par rapport à la surface de liquide dans le réacteur, **en ce qu'**il est constitué par des pales individuelles agencées avec décalage sous forme de lamelles et **en ce qu'**il a un diamètre d'agitateur de 0,3 à 0,4 fois le diamètre du réacteur.

10. Procédé de fabrication de sels d'hydroxylammonium selon la revendication 9, **caractérisé en ce que** dans l'agitateur à pales, la hauteur des pales individuelles est de 0,2 à 0,5 fois le diamètre de l'agitateur à pales.

11. Procédé de fabrication de sels d'hydroxylammonium selon l'une ou plusieurs des revendications 1 à 10, **caractérisé en ce que** l'agitateur à pales fonctionne dans la partie inférieure du réacteur avec une vitesse périphérique de 5 à 15 m/sec.
